# EUROPÄISCHE PATENTANMELDUNG

(11) **EP 2 674 705 A2**
(43) Veröffentlichungstag der Anmeldung: **18.12.2013**
(21) Anmeldenummer: 13002980.4
(22) Anmeldetag: 11.06.2013
(51) Int. Cl.: F25D 19/00, F25D 23/06

(54) **Kühl- und/oder Gefriergerät**

(30) Priorität: 13.06.2012 DE 102012011870; 28.08.2012 DE 102012017020
(71) Anmelder: Liebherr-Hausgeräte Lienz GmbH, 9900 Lienz (AT)
(72) Erfinder: Mühlburger, Martin, 9981 Kals (AT); Korber, Richard, 9991 Dölsach (AT); Mair, Michael, 9991 Dölsach (AT)
(74) Vertreter: Herrmann, Uwe

(57) **Zusammenfassung**

Die vorliegende Erfindung betrifft ein Kühl- und/oder Gefriergerät mit wenigstens einem Kältemittelkreislauf, der wenigstens einen Verflüssiger (20) und wenigstens einen Verdampfer (110) umfaßt, wobei sich zwischen der Veflüssigerseite (20) und der Verdampferseite (110) wenigstens ein Formteil (10) befindet, das zur Wärmesisolation zwischen der Verflüssigerseite (20) und der Verdampferseite (110) dient.

## Beschreibung

Die vorliegende Erfindung betrifft ein Kühl- und/oder Gefriergerät mit wenigstens einem Kältemittelkreislauf, der wenigstens einen Verflüssiger und wenigstens einen Verdampfer umfasst.

Aus dem Stand der Technik ist es bekannt, Kühl- und/oder Gefriergeräte mit einem Außenmantel sowie mit einem Innenbehälter auszugestalten, zwischen denen sich eine Wärmeisolationsschicht in Form einer Ausschäumung befindet. Diese Isolation umgibt üblicherweise den Innenbehälter und dient zur Wärmeisolation des gekühlten Innenraums. Durch eine derartige Ausschäumung lässt sich zwar eine gute Wärmeisolation erzielen, jedoch besteht ein Nachteil darin, dass der Schäumvorgang vergleichsweise zeit- und kostenintensiv ist und das Vorhandensein einer Schäumform voraussetzt.

Der vorliegenden Erfindung liegt daher die Aufgabe zugrunde, ein Kühl- und/oder Gefriergerät der eingangs genannten Art dahingehend weiterzubilden, dass dessen Herstell- und Kostenaufwand gegenüber bekannten Geräten verringert ist.

Diese Aufgabe wird durch ein Kühl- und/oder Gefriergerät mit den Merkmalen des Anspruchs 1 gelöst. Danach ist vorgesehen, dass sich zwischen der Verflüssigerseite und der Verdampferseite wenigstens ein Formteil befindet, das zur Wärmeisolation zwischen der Verflüssigerseite und der Verdampferseite des Gerätes dient.

Somit ist erfindungsgemäß vorgesehen, dass die Wärmeisolation vollständig oder zumindest teilweise durch zumindest ein Formteil gebildet wird, dass sich zwischen der Verflüssigerseite, d. h. der Seite des Gerätes, an der sich der Verflüssiger befindet und der Verdampferseite, d. h. der Seite des Gerätes, an der sich der Verdampfer befindet, erstreckt. Das Formteil dient somit in dieser Ausgestaltung der Erfindung als Isolation zwischen Verdampfer- und Verflüssigerseite und ersetzt vorzugsweise vollständig die Ausschäumung. Dies bringt den Vorteil mit sich, dass auf den Ausschäumvorgang sowie auf die Bereitstellung einer Schäumform verzichtet werden kann.

Vorzugsweise ist vorgesehen, dass das Kühl- und/oder Gefriergerät der vorliegenden Erfindung keinerlei Ausschäumung aufweist, so dass sich eine entsprechende Vereinfachung des Herstellprozesses und auch eine günstigere Herstellung des Gerätes erzielen lässt.

Denkbar ist es, dass das Formteil in einer Kühlkassette eingesetzt ist oder diese bildet, wobei die Kühlkassette an das Gerätegehäuse angebaut wird.

Durch den Einsatz des Formteils, das in beliebiger Art und Weise hergestellt sein kann und dass vorzugsweise aus einem Kunststoffmaterial besteht, kann das Schäumen selbst und auch die Schäumform eingespart werden.

Die vorliegende Erfindung betrifft des Weiteren ein Kühl- und/oder Gefriergerät mit den Merkmalen des Anspruchs 2. Danach ist vorgesehen, dass in dem Bereich zwischen der Außenseite und der Innenseite des Gerätes wenigstens bereichsweise zumindest ein wärmeisolierendes Formteil angeordnet ist, an dem eine oder mehrere Komponenten des Gerätes angeordnet sind. In diesem Fall dient das Formteil nicht nur zur Wärmeisolation, sondern auch als Halteteil, an dem eine oder mehrere Komponenten des Gerätes angeordnet sind. Alternativ oder zusätzlich dazu kann vorgesehen sein, dass sich zwischen der Außenseite des Gerätes und dem Formteil und/oder zwischen der Innenseite des Gerätes und dem Formteil keine Wärmeisolation in Form einer Ausschäumung befindet.

In diesem Fall ist es somit beispielsweise denkbar, dass in Richtung von innen nach außen bzw. von außen nach innen keinerlei Wärmeisolation in Form einer Ausschäumung vorliegt, sondern dass die Wärmeisolation zumindest in diesem Bereich nur durch das Formteil gebildet wird.

Eine besonders bevorzugte Ausgestaltung der Erfindung betrifft ein Gerät mit den Merkmalen der Ansprüche 1 und 2 miteinander kombiniert, d. h. das Teil kann sowohl als Isolationsteil als auch als Halteteil dienen und ggf. die in den Unteransprüchen genannten Merkmale aufweisen.

In weiterer Ausgestaltung der Erfindung ist vorgesehen, dass das Gerät wenigstens eine Außenwand aufweist, die die Außenseite des Gerätes bildet und dass die Außenwand zumindest bereichsweise durch das oder die Formteile gebildet wird. In diesem Fall wird eine weitere Gerätevereinfachung sowie auch eine Verringerung der Herstellkosten dadurch erzielt, dass Außenteile, die sonst die Außenhaut bilden insgesamt oder jedenfalls im Bereich des Formteils wegfallen können.

In diesem Fall ist es denkbar, dass die Außenseite des Gerätes zumindest teilweise durch das genannte Formteil gebildet wird, d. h. keine zusätzliche Verblendung etc. vorgesehen ist.

Alternativ oder zusätzlich kann diese Vorgehensweise auch für die den Nutzraum begrenzende Innenseite gelten. So ist es denkbar, dass das Formteil zumindest bereichsweise die Innenwand des Gerätes bildet, die beim Öffnen der Tür, des Deckels oder dergleichen für den Nutzer sichtbar ist. Auch diese Innenwand kann zumindest bereichsweise durch das genannte Formteil gebildet werden. In diesem Fall ist die zusätzliche Schaffung eines Innenbehälters bzw. einer Innenwand nicht erforderlich, da diese wie ausgeführt zumindest bereichsweise oder insgesamt durch das genannte Formteil gebildet wird. Dadurch ergibt sich eine Vereinfachung und auch eine Verringerung der Herstellkosten, da auf zusätzliche Teile in Form einer separaten Innenwand bzw. eines separaten Innenbehälters verzichtet werden kann.

In bevorzugter Ausgestaltung der vorliegenden Erfindung besteht das Formteil aus EPP oder weist EPP auf. Bei dem Stoff EPP handelt es sich um expandiertes Polypropylen. Darunter ist nicht nur herkömmliches expandiertes Polypropylen zu verstehen, sondern auch poröses expandiertes Polypropylen (PEPP).

Die Verwendung von EPP bringt den Vorteil mit sich, dass auch hitzebeaufschlagte Teile, wie beispielsweise der Verflüssiger des Kältemittelkreislaufes des Gerätes an bzw. in dem Formteil aufgenommen werden können, da die Erweichungstemperatur bei EPP vergleichsweise hoch liegt und die Aufnahme bzw. Fixierung dieser Wärme abgebenden Komponenten zulässt.

In weiterer Ausgestaltung der Erfindung ist vorgesehen, dass an dem Formteil eine oder mehrere Komponenten, insbesondere Komponenten des Kältemittelkreislaufs des Gerätes, fixiert oder in oder an diesem aufgenommen sind. So ist es beispielsweise denkbar, dass das Formteil als Trägerteil für diverse Anbauteile, wie beispielsweise Verdampfer, Verflüssiger, Elektronik, Dichtteile und Halter dient.

Bei den genannten Komponenten kann es sich beispielsweise um eine oder mehrere der Komponenten Verflüssiger, Verdampfer, Kompressor, Ventilator, Tauwasserschale, Rohrleitung, Kapillare, Sensor, Gerätesteuerung oder -Regelung, Anzeige und/oder Bedienelemente, Netzteil zur Stromversorgung des Gerätes, Dichtung, Halterung, Innenbehälter oder Innenwandung handeln.

Vorzugsweise sind mehrere der genannten Komponenten an oder in dem Formteil fixiert bzw. aufgenommen.

Diese Ausgestaltung der Erfindung bringt nicht nur den Vorteil mit sich, dass das Formteil selbst auch zur Halterung oder Fixierung der genannten Komponenten dienen kann, sondern auch den Vorteil, dass keine zusätzlichen Halterungsteile zur Aufnahme der genannten Komponenten bzw. Anbauteile notwendig sind. Vorzugsweise werden die genannten Komponenten bzw. Anbauteile in dem Formteil selbst positioniert und befestigt.

In weiterer Ausgestaltung der Erfindung ist vorgesehen, dass in dem Formteil eine oder mehrere Luftführungen angeordnet sind.

So ist es beispielsweise denkbar, Kanäle für die Luftführung in oder an dem Formteil mitauszuformen, was den Vorteil mit sich bringt, dass zusätzliche Teile zur Luftführung entfallen können.

Ein weiterer Vorteil besteht darin, dass die Anordnung der Komponenten und auch die Luftführungen an konkret gewünschten und vorgegebenen Stellen des Formteils angeordnet werden können, so dass die Luftführung relativ zu den Komponenten fest vorgegeben ist und eine spezielle Ausrichtung der Komponenten relativ zu den Luftführungen entfallen kann. Vorzugsweise sind an dem Formteil somit ein oder mehrere Befestigungspositionen für eine oder mehrere Komponenten vorgesehen, so dass die Position der Komponente im montierten Zustand fest vorgegeben ist.

In weiterer Ausgestaltung der Erfindung ist vorgesehen, dass die Luftführungen derart angeordnet sind, dass mittels der Luftführungen die Luft zu und/oder von dem Verflüssiger und/oder Verdampfer geführt wird. So ist es beispielsweise denkbar, eine oder mehrere Luftführungen vorzusehen, die durch die Luft mittels eines oder mehrerer Ventilatoren zu- bzw. von dem Verflüssiger bzw. zu und/oder von dem Verdampfer geführt wird.

Die vorliegende Erfindung betrifft des Weiteren ein Formteil oder eine Kassette mit einem Formteil für ein Kühl- und/oder Gefriergerät gemäß einem der Ansprüche 1 bis 9. Denkbar ist es, dass das Formteil Bestandteil einer Kühlkassette ist oder eine Kühlkassette ausbildet, die vorzugsweise an das Gerätegehäuse angebaut wird.

Das Formteil kann die Merkmale gemäß einem der Ansprüche 1 bis 9 aufweisen.

In bevorzugter Ausgestaltung der Erfindung ist vorgesehen, dass das Formteil, insbesondere das EPP-Teil als Isolations- und Halteteil in einer Kühlkassette eingesetzt wird, die an das Gehäuse angebaut wird. Es soll in bevorzugter Ausgestaltung der Erfindung als Isolation zwischen der Verdampfer- und der Verflüssigerseite dienen und somit jedenfalls im Bereich des Formteils oder insgesamt das Ausschäumen ersetzen.

In besonders bevorzugter Ausgestaltung der Erfindung ist vorgesehen, dass durch den Einsatz des Formteils das Schäumen selbst, die Schäumform und auch Teile, die die Außenform des Gerätes oder zumindest der genannten Kühlkassette bilden, eingespart werden können.

Das genannte Formteil kann als tragendes Teil der Kühlkassette dienen und somit deren Stabilität bestimmen. Es kann gleichzeitig auch als Trägerteile für diverse Anbauteile der Kassette wie beispielsweise Verdampfer, Verflüssiger, Elektronik, Dichtteile und Halter dienen.

Wie bereits oben ausgeführt, kann durch das Formteil auch der Luftstrom in der Kassette vorgegeben sein.

Das Formteil kann somit das zentrale Teil der Kassette bilden, das die Isolation und die Stabilität der Kassette bestimmt und gleichzeitig als Aufnahmeteil für diverse Anbauteile dient.

Bei der Kassette im Rahmen der vorliegenden Erfindung handelt es sich vorzugsweise um ein Aggregat bzw. ein Bauteil eines Kühl- bzw. Gefriergerätes, das von dem eigentlichen Nutzraum, der im Betrieb gekühlt wird, abgetrennt werden kann. Solche Geräte mit einem vom Nutzraum entkoppelbaren Kühlaggregat bzw. mit einer entkoppelbaren Kühlkassette, die zumindest einen Teil der Komponenten des Kältemittelkreislaufes aufweist, werden beispielsweise für Zapfanlagen verwendet. Das erfindungsgemäße Kühl- und/oder Gefriergerät kann somit derart aufgebaut sein, dass es zum einen aus der Kühlkassette und zum anderen aus einem Bauteil aufgebaut ist, das den Nutzraum bildet bzw. diesen umgibt. Diese beiden Bauteile können entkoppelbar ausgeführt sein, das heißt die Kühlkassette kann als austauschbares Aggregat eingesetzt werden. Dabei ist es bevorzugt, wenn sich sämtliche Komponenten des Kältemittelkreislaufes an oder in der Kühlkassette befinden und die Kaltluft beispielsweise über ein Gebläse oder dergleichen in den Nutzraum eingeführt wird.

Die vorliegende Erfindung betrifft vorzugsweise somit Geräte, bei denen die Kühlkassette bzw. das Kühlaggregat vom Nutzraum abnehmbar bzw. entkoppelbar ist.

Ein besonderer Vorteil der vorliegenden Erfindung liegt darin, dass die Kassette nicht ausgeschäumt werden muss, da die Wärmeisolation durch das Formteil gebildet wird. Somit kann das Schäumen, die Schäumform und auch die Außenseite, die sonst die Außenhaut bilden, in besonders bevorzugter Ausgestaltung der Erfindung weggelassen werden.

Vorzugsweise sind keine zusätzlichen Teile zur Aufnahme von Anbauteilen notwendig, da diese Halterungspositionen bzw. Fixierungseinrichtungen bereits Bestandteil des Formteils sind.

Weitere Einzelheiten und Vorteile der Erfindung werden anhand eines in der Zeichnung dargestellten Ausführungsbeispiels näher erläutert. Es zeigen:
- Figur 1:: eine perspektivische Vorderansicht des Formteils,
- Figur 2:: eine perspektivische Rückansicht des Formteils,
- Figur 3:: eine perspektivische Ansicht der Rückseite des Formteils mit daran angeordneten Anbauteilen,
- Figur 4:: eine perspektivische Ansicht des Formteils in einer Vorderansicht mit daran angeordneten Anbauteilen,
- Figur 5:: eine perspektivische Ansicht gemäß Figur 4 ohne innenraumseitige Verblendung und ohne Ventilator,
- Figur 6:: eine Längsschnitt-Darstellung durch das Formteil mit daran angeordneten Komponenten bzw. Anbauteilen,
- Figur 7:: eine perspektivische Ansicht von hinten auf eine Kühlkassette mit dem darin angeordneten Formteil und
- Figur 8:: eine perspektivische Darstellung eines erfindungsgemäßen Kühl- bzw. Gefriergerätes mit Kühlkassette und einem damit lösbar in Verbindung stehenden Bauteil, das den Nutzraum bildet bzw. diesen umgibt.

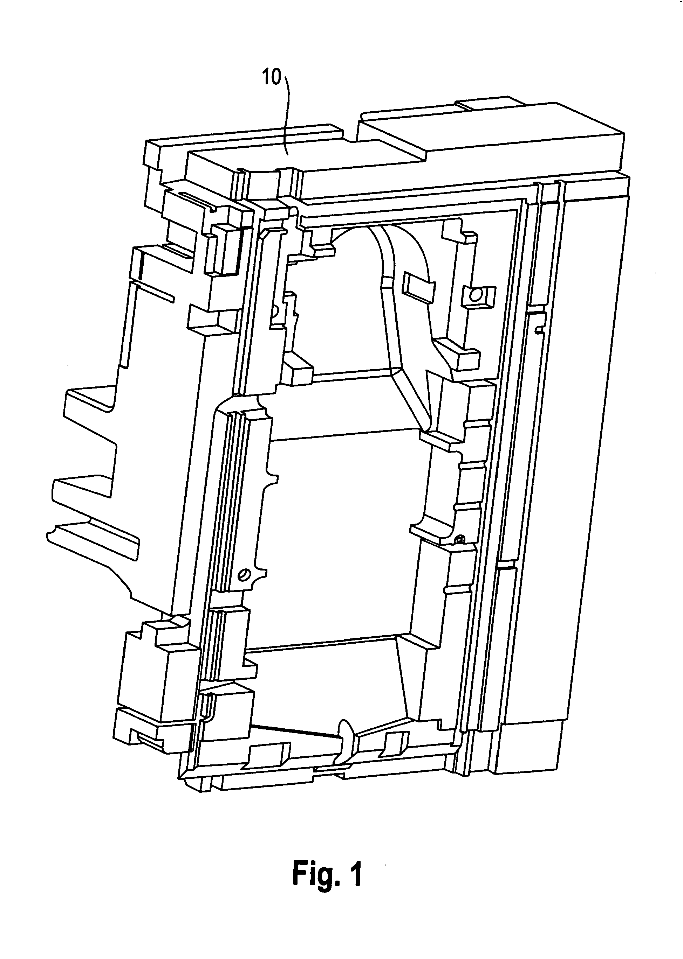

In Figur 1 ist mit dem Bezugszeichen 10 ein aus EPP bestehendes Formteil gekennzeichnet, das in Figur 1 in seiner Vorderansicht dargestellt ist. Wie dies aus Figur 1 ersichtlich ist, ist das Formteil als einteiliges Gebilde ausgeführt und weist eine Mehrzahl von Aufnahmepositionen sowie auch Luftführungskanälen auf, die einerseits zur Fixierung von Komponenten und andererseits zur Luftführung einerseits auf der zum Betrachter hin gewandten Verdampferseite und andererseits auf der vom Betrachter abgewandten Verflüssigerseite des Formteils dienen.

Aus Figur 1 ist ersichtlich, dass in dem Formteil auf dessen zum gekühlten Innenraum gewandter Vorderseite eine zentrale Vertiefung angeordnet ist, die zur Aufnahme des Verdampfers sowie des oberhalb des Verdampfers angeordneten Ventilators dienen.

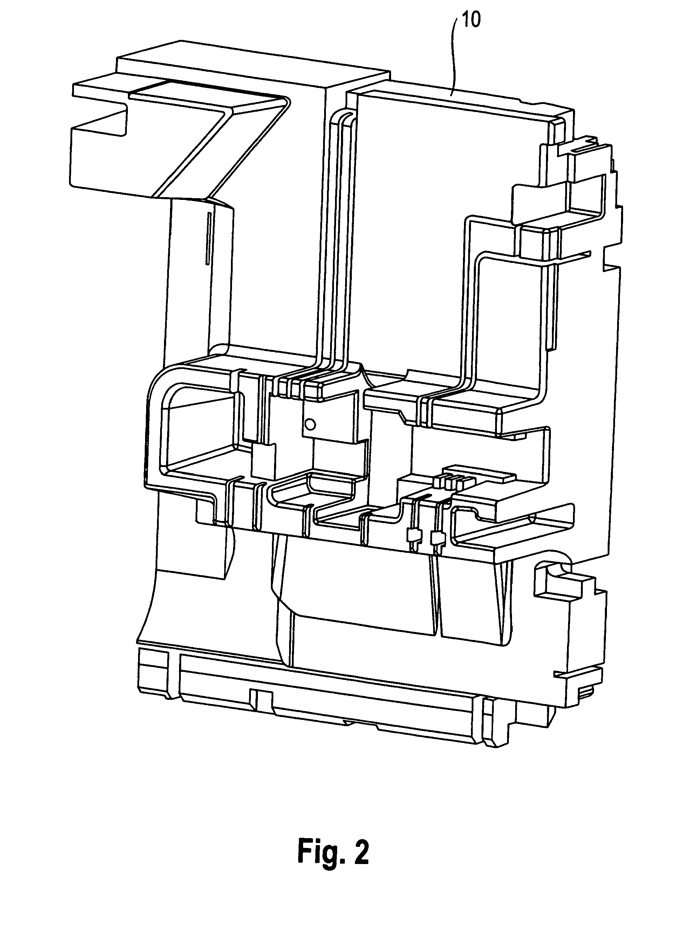

Figur 2 zeigt eine Rückansicht des Formteils 10 und verdeutlicht ebenfalls, dass eine Mehrzahl von Luftführungen und Aufnahmebereichen für verschiedene Komponenten des Gerätes vorgesehen sind, wobei diese Komponenten beispielsweise Komponenten des Kältemittelkreislaufes sowie auch Kabel, sonstige Rohre, etc. sein können.

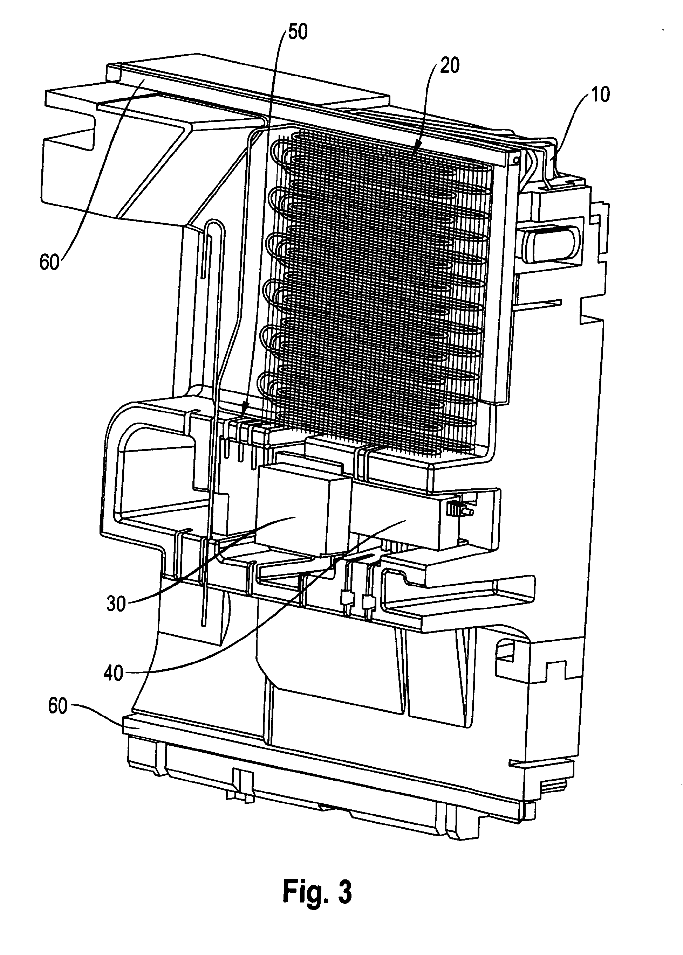

Figur 3 zeigt in einer perspektivischen Ansicht gemäß Figur 2 das EPP-Formteil von der Rückseite, d. h. von der Verflüssigerseite und verdeutlicht, wie in den verschiedenen Ausnehmungen des Formteils verschiedene Komponenten angeordnet sind. Die zum Betrachter hin gewandte Seite gemäß Figur 3 stellt die sichtbare Seite der Kühlkassette dar.

Mit dem Bezugszeichen 20 ist ein Verflüssiger gekennzeichnet, der über Verstärkungsschienen 60 in einer Vertiefung bzw. Aufnahme auf der Rückseite des Formteils 10 angeordnet ist, wie dies aus Figur 3 hervorgeht. Das Bezugszeichen 30 kennzeichnet eine Elektronikbox, die zur Gerätesteuerung bzw. Regelung dient und die ebenfalls an dem Formteil 10 angeordnet ist. Das Bezugszeichen 40 kennzeichnet ein Netzteil, das ebenfalls einer Ausnehmung des Formteils zugeordnet ist, wie dies aus Figur 3 ersichtlich ist.

Mit dem Bezugszeichen 50 sind Kabelführungen gekennzeichnet, die zur Aufnahme einer oder mehrerer Kabel dienen.

Des Weiteren können in dem Formteil Ausnehmungen vorgesehen sein, die zur Aufnahme von Rohrleitungen dienen. In dem hier dargestellten Ausführungsbeispiel gemäß Figur 3 ist beispielsweise eine Rohrleitung vorgesehen, die zum Verflüssiger führt sowie eine Rohrleitung, die vom Verflüssiger weg führt. Eine oder beide der genannten Rohrleitungen sowie Rohrleitungen allgemein können in einer oder mehreren Ausnehmungen bzw. Nuten zumindest abschnittsweise aufgenommen sein, so dass die Positionierung der Rohrleitungen fest vorgegeben ist.

Ein weiterer Vorteil besteht darin, dass durch geeignete Aufnahmen, wie beispielsweise Nuten oder dergleichen des Formteils 10 sichergestellt werden kann, dass die Rohrleitungen nicht miteinander in Kontakt stehen, so dass Geräusche im Betrieb des Gerätes vermieden werden können.

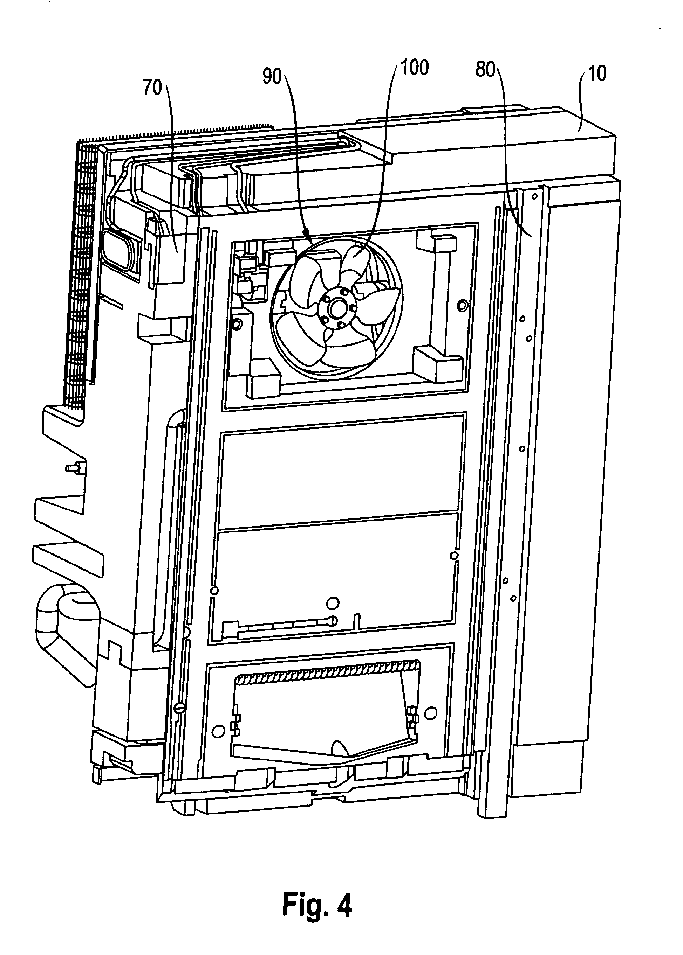

Figur 4 zeigt in einer perspektivischen Ansicht die Vorderseite des Formteils 10 mit darin angeordneten Anbauteilen bzw. Komponenten.

Mit dem Bezugszeichen 70 ist beispielsweise ein Halter für einen Sensor, beispielsweise für einen Temperaturfühler gekennzeichnet. Das Bezugszeichen 80 kennzeichnet eine Befestigungsschiene und das Bezugszeichen 90 kennzeichnet die Luftführung mit Ventilator 100 und Sensoren.

Die Luftführungskanäle auf der Verdampferseite des Formteils 10, die in Figur 4 dargestellt ist, werden somit einerseits durch Vertiefungen bzw. eine bestimmte Formgebung im Formteil selbst und andererseits durch die mit dem Bezugszeichen 90 gekennzeichnete plattenartige Luftführung begrenzt.

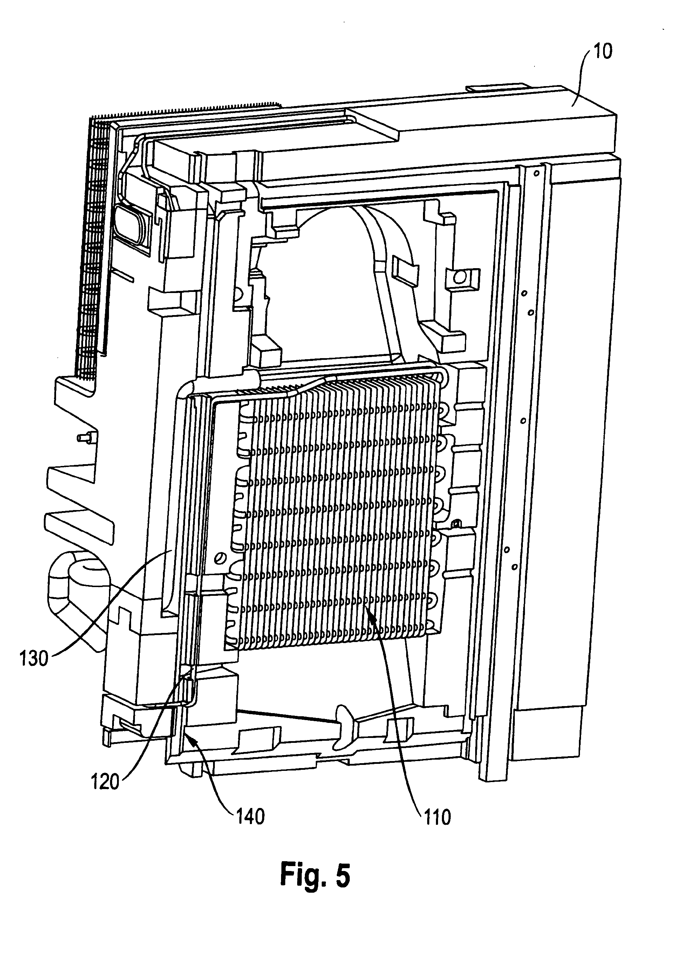

Wie dies aus Figur 4 hervorgeht, ist die Luftführung 90 plattenartig ausgeführt und überdeckt den Verdampfer, der in Figur 5 mit dem Bezugszeichen 110 gekennzeichnet ist. Die Luftführung 90 stellt somit eine Blende dar, die nach der Trennung der Kühlkassette vom Nutzraum sichtbar ist. Im Zustand, in dem die Kühlkassette an den Nutzraum bzw. das den Nutzraum bildenden Bauteil montiert, ist die Blende für einen Nutzer nicht sichtbar. Diese Luftführung 90 bildet ein Bestandteil, das ebenfalls an dem Formteil 10 festgelegt werden kann, beispielsweise durch eine Schraubverbindung oder dergleichen.

Grundsätzlich ist darauf hinzuweisen, dass die Befestigung der Komponenten an dem Formteil durch beliebige Art und Weise möglich ist. In Betracht kommt beispielsweise eine Klemmverbindung, eine Rastverbindung, stoffschlüssige oder sonstige kraft- oder formschlüssige Verbindungen. Auch ein Verschrauben etc. ist denkbar und von der Erfindung mitumfasst.

Wie dies aus Figur 4 weiter hervorgeht, befindet sich in dem Teil 90 oberhalb der Abdeckung für den Verdampfer 110 eine Ausnehmung, mit der das Laufrad des Ventilators 100 fluchtet. Durch diese Ausnehmung wird die Kaltluft von dem Verdampfer 110 in den gekühlten Innenraum eingeleitet.

Figur 5 zeigt die Ausführungsform gemäß Figur 4 ohne Luftführungsblende 90. Aus dieser Figur ist ersichtlich, dass in der vorderseitigen Ausnehmung des Formteils 10 der Verdampfer 110 angeordnet ist, der einerseits mit einem Druckrohr 120 in Verbindung steht, durch das verflüssigtes Kältemittel zum Verdampfer 110 gelangt. Des Weiteren ist ein Saugrohr 130 vorgesehen, das mit dem Kompressor in Verbindung steht und durch das das verdampfte Kältemittel von dem Verdampfer 110 zum Kompressor gelangt.

Das Bezugszeichen 140 kennzeichnet eine Dichtung, mittels derer gewährleistet ist, dass die Luftführungsblende 90 dicht an dem Formteil 10 anliegt.

Figur 5 zeigt das Formteil bzw. die Kühlkassette in einer Längsschnittansicht und verdeutlicht nochmals die Anordnung der verschiedenen Komponenten.

Wie dies durch Pfeile markiert ist, wird durch eine untere Öffnung der Luftführung 90 Luft aus dem gekühlten Innenraum angesaugt, über den Verdampfer 110 geführt und mittels des Ventilators 100 wieder in den gekühlten Innenraum geleitet.

Der Ventilator 100 ist somit ein Umluftventilator, der die Luft in den gekühlten Raum einführt und diese über den Verdampfer 110 ansaugt.

Der Ventilator befindet sich mit seinem Ventilatormotor in dem Bereich hinter der Luftführung. Entsprechendes gilt für den Verdampfer 110.

Im rückseitigen Bereich des Formteils befindet sich der Verflüssiger, der Kompressor 150 sowie ein Verflüssigerventilator 160, der die Aufgabe hat, auf der Verflüssigerseite des Formteils eine Luftströmung zu bewirken. Das Bezugszeichen 170 kennzeichnet eine Tauwasserschale.

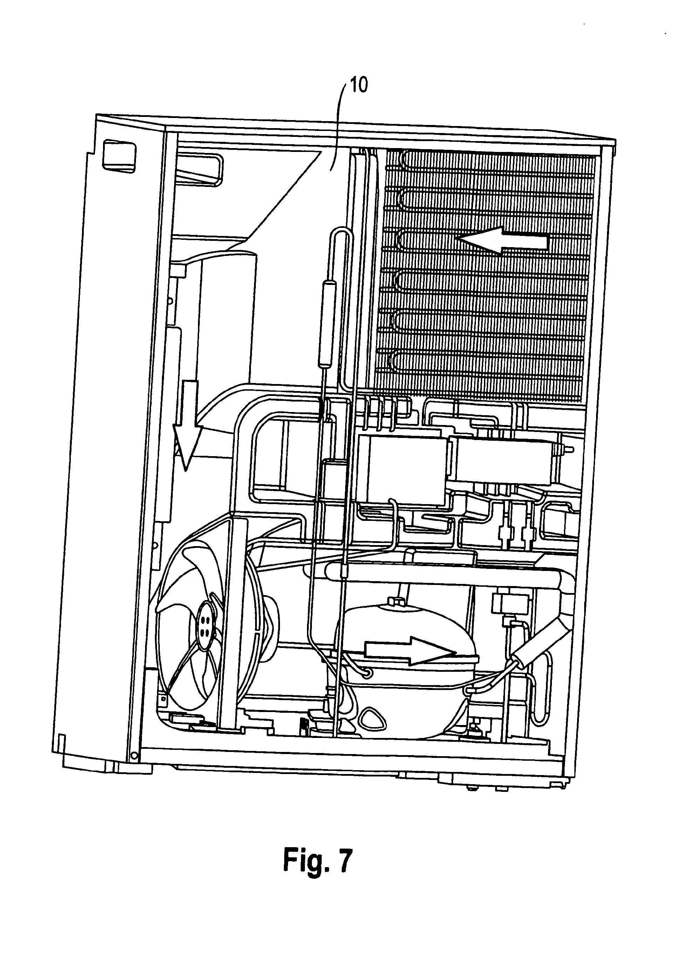

Diese Luftströmung ergibt sich aus der Ansicht gemäß Figur 7. Hier ist durch Pfeile markiert, dass der Verflüssigerventilator 160 derart ausgebildet ist und derart betrieben wird, dass Luft über den Verflüssiger 20 angesogen wird und mittels des Verflüssigerventilators 160 über den Kompressor 150 geleitet wird. Die auf diese Weise erwärmte Luft wird sodann durch eine seitliche Auslassöffnung der in Figur 7 dargestellten Kühlkassette ausgeblasen. Die Zuluft zum Ventilator wird ebenfalls über eine Öffnung in der Kühlkassette eingesogen, die sich in einer Seitenwand der Kühlkassette befindet, wie dies aus Figur 7 hervorgeht. Grundsätzlich kann die Luftzufuhr und -abfuhr auch an anderer Stelle erfolgen.

Das Formteil kann Bestandteil einer Kühlkassette sein, die in Figur 7 dargestellt ist und die wie aus Figur 7 ersichtlich keine separate Rückwand aufweist.

In dem in Figur 7 dargestellten Ausführungsbeispiel sind nur an den beiden Seitenwandungen sowie an der Oberseite Verblendungen bzw. ein Gehäuse der Kühlkassette vorgesehen. Die Kühlkassette kann an das Gehäuse des Kühl- bzw. Gefriergerätes angebaut werden.

Das Formteil 10 dient als tragendes Teil der in Figur 7 dargestellten Kühlkassette und bestimmt deren Stabilität. Es bildet das zentrale Teil der Kassette und dient zur Isolation und Stabilität der Kassette und gleichzeitig als Aufnahmeteil für diverse Anbauteile, vorzugsweise für Komponenten des Kältemittelkreislaufes, wie dies oben beschrieben wurde.

Durch den Einsatz des Formteils 10 kann in dem Ausführungsbeispiel die Rückseite des Gerätes bzw. die Kühlkassette oder das Gerät insgesamt ohne Ausschäumung ausgebildet werden, was zu einer Vereinfachung des Herstellprozesses und zu einer Kostenverringerung führt.

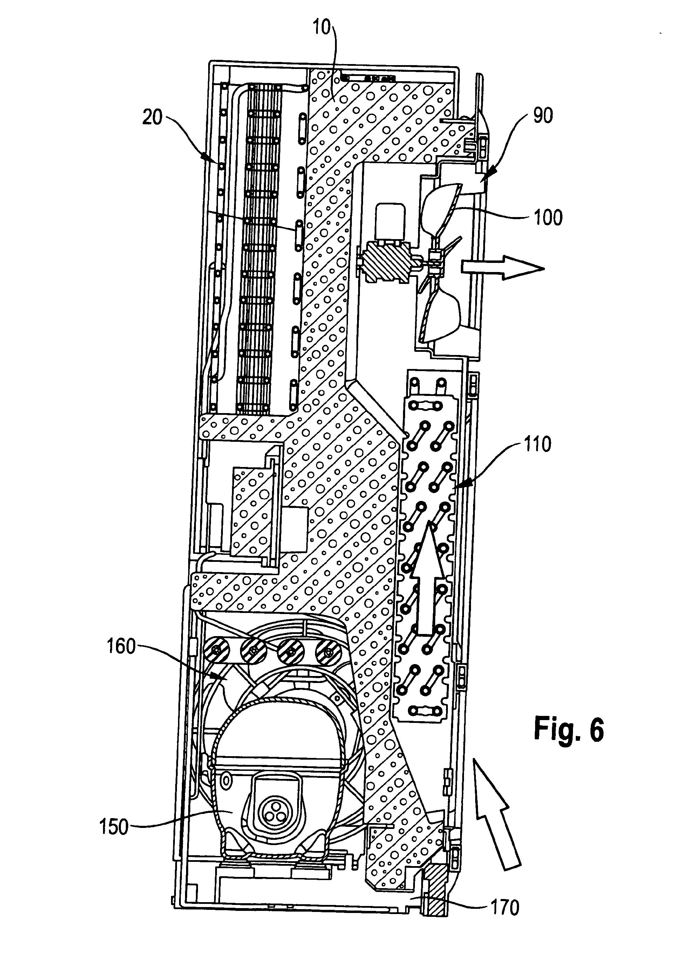

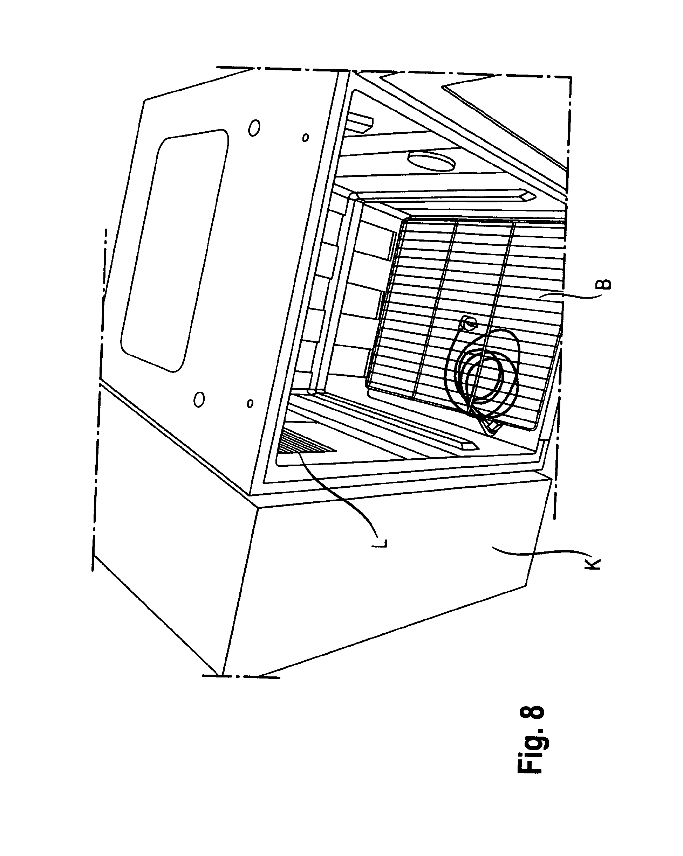

Figur 8 zeigt in perspektivischer Darstellung ein erfindungsgemäßes Kühl- bzw. Gefriergerät mit einer links dargestellten Kühlkassette K und einem rechts dargestellten Bauteil B, das den Nutzraum umgibt und das einen gekühlten Innenraum aufweist, der durch eine frontseitige Tür verschließbar ist. Wie dies beispielsweise aus Figur 6 hervorgeht, ist es denkbar, dass die Kühlkassette K sämtliche Komponenten des Kältemittelkreislaufes aufweist und dass über einen Ventilator 100 die durch den Kältemittelkreislauf erzeugte Kaltluft in den Nutzraum eingeführt wird. Dies ist durch den Pfeil in Figur 6 verdeutlicht. Der Lufteinlass in das Bauteil B bzw. in den gekühlten Innenraum erfolgt über das Element L gemäß Figur 8.

Vorzugsweise ist vorgesehen, dass die Kühlkassette K von dem Bauteil B entkoppelt werden kann.

Die vorliegende Erfindung betrifft nicht nur ein gesamtes Kühl- bzw. Gefriergerät, wie es in Figur 8 dargestellt ist, sondern auch die Kühlkassette als solche, wobei die Kühlkassette gemäß dem kennzeichnenden Teil eines oder mehrerer der Ansprüche 1 bis 9 ausgeführt sein kann.

## Patentansprüche

1. Kühl- und/oder Gefriergerät mit wenigstens einem Kältemittelkreislauf, der wenigstens einen Verflüssiger und wenigstens einen Verdampfer umfasst, **dadurch gekennzeichnet, dass** sich zwischen der Verflüssigerseite und der Verdampferseite wenigstens ein Formteil befindet, das zur Wärmesisolation zwischen der Verflüssigerseite und der Verdampferseite dient.

2. Kühl- und/oder Gefriergerät mit wenigstens einer Außenseite und mit wenigstens einer den Nutzraum begrenzenden Innenseite, **dadurch gekennzeichnet, dass** in dem Bereich zwischen der Außenseite und der Innenseite wenigstens bereichsweise zumindest ein wärmeisolierendes Formteil angeordnet ist, an dem eine oder mehrere Komponenten des Gerätes angeordnet sind und/oder das sich zwischen der Außenseite des Gerätes und dem Formteil und/oder zwischen der Innenseite des Gerätes und dem Formteil keine Wärmeisolation in Form einer Ausschäumung befindet.

3. Kühl- und/oder Gefriergerät nach Anspruch 1 oder 2, **dadurch gekennzeichnet, dass** sich in dem Bereich zwischen Verflüssiger und Verdampfer bzw. im Bereich des Formteils wenigstens bereichsweise keine Wärmeisolation in Form einer Ausschäumung befindet.

4. Kühl- und/oder Gefriergerät nach einem der vorhergehenden Ansprüche, **dadurch gekennzeichnet, dass** das Gerät wenigstens eine Außenwand aufweist, die die Außenseite des Gerätes bildet und dass die Außenwand zumindest bereichsweise durch das Formteil gebildet wird und/oder dass das Gerät wenigstens eine den Nutzraum begrenzende Innenwand aufweist und dass die Innenwand zumindest bereichsweise durch das Formteil gebildet wird.

5. Kühl- und/oder Gefriergerät nach einem der vorhergehenden Ansprüche, **dadurch gekennzeichnet, dass** das Formteil aus EPP besteht oder EPP aufweist und/oder dass das Formteil Bestandteil einer Kühlkassette ist oder diese ausbildet.

6. Kühl- und/oder Gefriergerät nach einem der vorhergehenden Ansprüche, **dadurch gekennzeichnet, dass** an dem Formteil eine oder mehrere Komponenten, insbesondere Komponenten des Kältemittelkreislaufes des Gerätes fixiert oder in oder an diesem aufgenommen sind.

7. Kühl- und/oder Gefriergerät nach Anspruch 6, **dadurch gekennzeichnet, dass** es sich bei der oder den Komponenten um eine oder mehrere der folgenden Komponenten handelt: Verflüssiger, Verdampfer, Kompressor, Ventilator, Tauwasserschale, Rohleitung, Kapillare, Sensor, Gerätesteuerung oder-regelung, Anzeige- und/oder Bedienelement, Netzteil zur Stromversorgung des Gerätes, Dichtung, Halterung, Innenbehälter oder Innenwandung.

8. Kühl- und/oder Gefriergerät nach einem der vorhergehenden Ansprüche, **dadurch gekennzeichnet, dass** in oder an dem Formteil eine oder mehrere Luftführungen angeordnet sind.

9. Kühl- und/oder Gefriergerät nach Anspruch 8, **dadurch gekennzeichnet, dass** die Luftführungen derart angeordnet sind, dass mittels der Luftführungen die Luft zu und/oder von dem Verflüssiger und/oder Verdampfer geführt wird.

10. Formteil für ein Kühl- und/oder Gefriergerät gemäß einem der Ansprüche 1 bis 9 oder Kühlkassette mit wenigstens einem Formteil für ein Kühl- und/oder Gefriergerät gemäß einem der Ansprüche 1 bis 9.
